## Europäisches Patentamt

## European Patent Office

## Office européen des brevets

(19)

(11) Veröffentlichungsnummer: **0 021 148**
**A1**

(12) **EUROPÄISCHE PATENTANMELDUNG**

(21) Anmeldenummer: **80103087.5**

(22) Anmeldetag: **03.06.80**

(51) Int. Cl.³: **G 01 B 9/02, G 01 B 11/30**

(30) Priorität: **22.06.79 DE 2925117**

(43) Veröffentlichungstag der Anmeldung: **07.01.81**
Patentblatt **81/1**

(84) Benannte Vertragsstaaten: **DE FR GB**

(71) Anmelder: **International Business Machines Corporation, Armonk, N.Y. 10504 (US)**

(72) Erfinder: **Makosch, Günter, Stuttgarter Strasse 40, D-7032 Sindelfingen-Maichingen (DE)**

(74) Vertreter: **Teufel, Fritz, Dipl.-Phys., Schönaicher Strasse 220, D-7030 Böblingen (DE)**

(54) **Verfahren und Einrichtung zur interferometrischen Messung.**

(57) Bei einem interferometrischen Meßverfahren mit großem Meßbereich werden zwei senkrecht zueinander polarisierte Teilstrahlenbündel (eo bzw. o), die einen Winkel (α) miteinander einschließen, auf einen gemeinsamen Bereich des Testkörpers (8) gerichtet und die dort reflektierten Teilstrahlen zur Erzeugung von Interferenzen wieder vereinigt. Die Aufspaltung eines Meßstrahls in zwei Teilstrahlen kann beispielsweise in einem doppelbrechenden Kristall (5) erfolgen, der Winkel α wird durch das Maß der Aufspaltung und die Brennweite f einer nachgeschalteten Linse (7) bestimmt. Zur Wiedervereinigung durchlaufen die beiden reflektierten Teilstrahlen wiederum die Linse (7) und den doppelbrechenden Kristall (5). Die Auswertung des Interferenzmusters geschieht entweder visuell mit einem nachgeschalteten Analysator oder elektro-optisch durch Phasenmodulation eines der beiden reflektierten Teilstrahlen.

## Verfahren und Einrichtung zur interferometrischen Messung

Die Erfindung betrifft ein interferometrisches Meßverfahren nach dem Oberbegriff des Hauptanspruchs sowie eine Einrichtung zur Durchführung des Verfahrens.

Die Untersuchung von Oberflächenstrukturen, beispielsweise die Meßung der Rauhigkeit der Oberflächen von Halb- oder Fertigprodukten oder der Profilhöhen von Halbleiterplättchen mittels optischer Interferenzverfahren liefert nur dann eindeutige Ergebnisse, wenn die Höhendifferenz zwischen zwei benachbarten, noch unterscheidbaren Punkten den Betrag der halben Lichtwelle ($\lambda/2$) nicht überschreitet. Während diese Einschränkung bei der Untersuchung von relativ große Flächenbereiche oder relativ große Krümmungsradien aufweisenden Flächen im allgemeinen nicht oder nur wenig störend ist, sind bei in mikroskopischen Flächenbereichen liegenden Rauhtiefen und bei Stufenhöhen von mehr als $\lambda/2$ die Meßwerte nicht mehr eindeutig, so daß Interferometer in derartigen Fällen oft überhaupt nicht oder nur im Zusammenhang mit Zusatzmeßgeräten verwendet werden können. Diese Nachteile werden durch die beispielsweise in "Optical Interferometry" von M. Francon 1966, Academic Press, New York e London, Seiten 79 ff., beschriebene Mehrfarbeninterferometrie zum Teil vermieden, bei der die Messungen mit aus zwei oder mehr diskreten Spektralbereichen bestehenden Strahlen durchgeführt werden, wobei bei der Auswertung des Interferenzlinienmusters nur solche Linien berücksichtigt werden, die mit anderen spektralen Komponenten zugeordneten Interferenzlinien zusammenfallen. Die Auswertung derartiger Messungen ist aber insbesondere dann sehr umständlich und fehlerbehaftet, wenn Untersuchungen mit einem sehr großen Meßbereich durchgeführt werden sollen. Zur Erzielung eines großen Meßbereichs müssen die einzelnen Spektralbereiche sehr eng beieinander liegen, so daß die Abstände zwischen jeweils zwei oder mehr Spektralkomponenten zugeordneten Interferenzlinien sich nur sehr langsam ändern, was zur Folge hat, daß das Interferenzlinienfeld jeweils aus Gruppen von nebeneinander liegenden bzw. sich in unterschiedlichem Ausmaß überlappenden Interferenzlinien besteht. Dadurch wird es schwer und in manchen Fällen überhaupt nicht möglich mit der erforderlichen Eindeutigkeit festzustellen, an welchen Stellen des Interferenzlinienfeldes eine optimale räumliche Koinzidenz der den einzelnen Spektralbereichen zugeordneten Interferenzlinien vorliegt. Aus den genannten Gründen ist auch eine automatische Auswertung der Interferenzlinienfelder in der Regel nicht möglich.

Ein Beispiel für die interferenz-optische Messung von Höhenprofilen mit der obenerwähnten störenden Beschränkung des Meßbereichs ist in der deutschen Auslegeschrift 14 97 539 zu finden; zwei senkrecht zueinander polarisierte Teilstrahlen beaufschlagen dort die Meßfläche bzw. eine Referenzfläche und ergeben nach Durchlaufen eines Analysators ein auswertbares Interferenzlinienfeld. Automatische Auswerteverfahren für derartige Interferenzanordnungen sind beispielsweise in der deutschen Auslegeschrift 28 51 750 beschrieben.

Die Erfindung geht von der Aufgabe aus, ein Interferenzverfahren anzugeben, bei dem der Bereich, in dem eindeutige Messungen mit der erforderlichen Genauigkeit möglich sind, gegenüber den bekannten Verfahren mit monochromatischem Meßstrahl um einige Zehnerpotenzen erhöht werden kann. Weiterhin soll es möglich sein, den Meßbereich manuell oder automatisch schrittweise um Größenordnungen oder um Zehnerpotenzen zu verändern, was angesichts der Tatsache, daß ein vergößerter Meßbereich in der Regel ein verkleinertes Auflösungsvermögen zur Folge hat, für viele Anwendungen von größter Wichtigkeit ist. Weiterhin soll das Verfahren durch

GE 979 022E

Anwendung bestimmter Maßnahmen auch bei größten Meßbereichen eine automatische Auswertung mit besonders hohem Auflösungsvermögen ermöglichen. Diese Aufgabe wird durch die im Kennzeichen des Hauptanspruchs beschriebene Erfindung gelöst.

Die oben beschriebenen Vorteile können mit keinem der bisher bekannten Verfahren auch nur annähernd erreicht werden. Diese Vorteile bestehen von allen im einfachen Aufbau der erforderlichen Vorrichtungen, der einfachen Bedienbarkeit, der großen Genauigkeit und der Möglichkeit, den Meßbereich, erforderlichenfalls auch automatisch und programmgesteuert, in großem Umfang steuerbar zu verändern. Darüber hinaus ist das erfindungsgemäße Verfahren besonders vorteilhaft zur automatischen Auswertung geeignet.

Die Erfindung wird anschließend anhand der Figuren näher erläutert.

Es zeigen:

Fig. 1      ein Ausführungsbeispiel der Erfindung.

Fig. 2      eine von der Erfindung gebrauchmachende automatische interferometrische Meßvorrichtung mit besonders hohem Auflösungsvermögen.

Fig. 3      eine Prinzipzeichnung zur Darstellung des Strahlengangs.

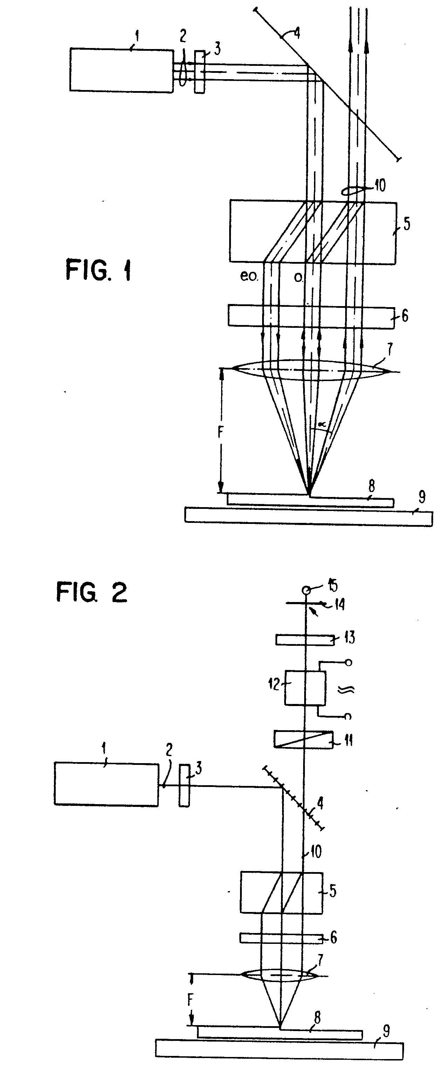

Die in Fig. 1 dargestellte Vorrichtung besteht aus einer, vorzugsweise als Laser ausgebildeten Lichtquelle 1 zur Erzeugung eines Strahles 2, einer $\lambda/2$-Platte 3, einem teildurchlässigen Spiegel 4, einem doppelbrechenden Kristall 5, einer $\lambda/4$-Platte 6, einer Linse 7 und einem ein Objekt 8

GE 979 022E

- 4 -

tragenden Support 9. Die von der Lichtquelle 1 ausgehende linear polarisierte Strahlung 2 erfährt im $\lambda/2$-Plättchen 3 eine geeignete Drehung der Polarisationsebene und wird am teildurchlässigen Strahlenteiler 4 in Richtung auf den doppelbrechenen Kristall 5 abgelenkt wird. Im doppelbrechenen Kristall wird die linear polarisierte Strahlung in einen ordentlichen und in einen außerordentlichen Strahl o bzw. eo aufgespalten, die den Kristall gegeneinander versetzt als zueinander parallele Strahlen verlassen. Die Linse 7 ist so angeordnet, daß sie vom ordentlichen Strahl o im Bereich ihrer optischen Achse und vom außerordentlichen Strahl eo in ihrem Randbereich durchsetzt wird, so daß beide Strahlen auf der in der Brennebene der Linse liegenden oberen Fläche des Objektes 8 vereinigt und fokussiert werden. Der senkrecht auftreffende ordentliche Strahl o wird an der reflektierenden Oberfläche des Objektes 8 in sich selbst zurückreflektiert, während der schräg auftreffende außerordentliche Strahl eo symmetrisch zur optischen Achse zur Linse zurückreflektiert wird. Da die Strahlen das $\lambda/4$-Plättchen 6 zweimal durchsetzen, ist ihre Polarisationsrichtung beim Eintreten in den doppelbrechenen Kristall 5 jeweils um 90° gegenüber der Polarisationsrichtung der den Kristall ursprünglich verlassenden Strahlen gedreht. Das hat zur Folge, daß der an der Fläche des Objektes 8 reflektierte ordentliche Strahl o den doppelbrechenen Kristall 5 beim zweiten Durchtritt als außerordentlicher Strahl durchsetzt und dabei abgelenkt wird, während der an der Fläche des Objektes 8 symmetrisch zur optischen Achse reflektierte ursprüngliche außerordentliche Strahl eo den doppelbrechenen Kristall als ordentlicher Strahl unabgelenkt durchsetzt. Beide Strahlen werden beim Verlassen der oberen Fläche des doppelbrechenen Kristalls zu einem aus zwei senkrecht zueinander polarisierten Komponenten bestehenden Strahl 10 vereinigt, der anschließend in nicht dargestellter, aber an sich bekannter Weise zur Erzeugung eines Interferenz-

GE 979 022E

linienfeldes verwendet wird. Die Information über die Lage der Objektfläche wird durch die Phasendifferenz der beiden Komponenten definiert.

Ist die reflektierende Fläche vollkommen eben und liegt sie in der Brennebene des Objektivs, so ist die zwischen den beiden Komponenten entstehende Phasendifferenz gleich Null. Bei einer Höhenänderung des Objektes um $\Delta h$ entsteht zwischen beiden Komponenten eine Phasendifferenz von

$$\Delta\phi \;=\; \frac{4\pi}{\lambda} \quad \Delta h (1-\cos\alpha) \qquad\qquad (1)$$

wobei $\lambda$ = Lichtwellenlänge, $\Delta h$ = Höhenänderung (Stufenhöhe) und $\alpha$ = Einfallswinkel des außerordentlichen Strahls.

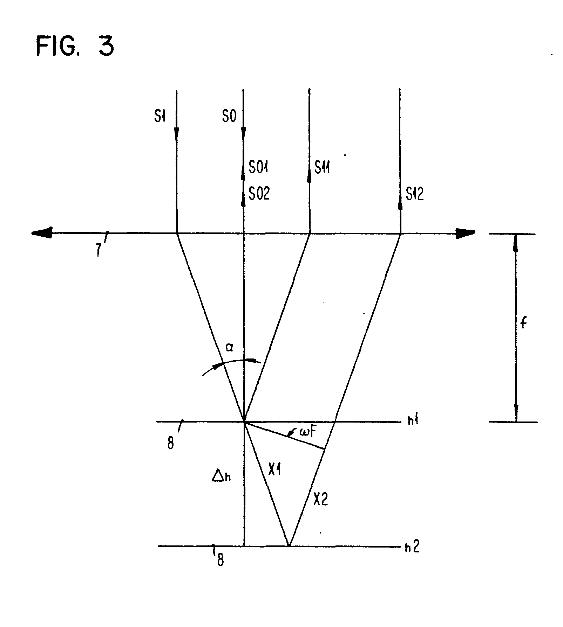

Zur Erläuterung von Gleichung (1) ist in Fig. 3 eine schematische Darstellung des Strahlengangs wiedergegeben. In dieser Zeichnung bedeuten:

| | |
|---|---|
| $h_1$ | – die Anfangslage der Testfläche (Oberfläche des Objekts 8) |
| $h_2$ | – Endlage der Testfläche (nach einer Verschiebung des Objekts 8 in vertikaler Richtung um $\Delta h = h_2 - h_1$) |
| $S_1$, $S_0$ | – parallele Lichtbündel, die auf die Linse 7 auftreffen |
| $\alpha$ | – Winkel, den die Strahlen $S_1$, $S_0$ auf dem Objekt einschließen |
| $S_{01}$, $S_{11}$ | – Strahlen, die in Position $h_1$ senkrecht bzw. schräg reflektiert werden |
| $S_{02}$, $S_{12}$ | – Strahlen, die in Position $h_2$ senkrecht bzw. schräg reflektiert werden |
| $f$ | – Brennweite der Linse 7. |

GE 979 022E

Zur Ableitung von Gleichung (1) wird angenommen, daß in Stellung $h_1$ der Testfläche die Phasendifferenz $\Delta\phi$ zwischen den Strahlen $S_{01}$ und $S_{11}$ gleich Null gesetzt wird (z. B. durch entsprechende Kompensationsmittel).

In Stellung $h_2$ ist dann die Phasendifferenz $\Delta\phi$ zwischen den Strahlen $S_{02}$ und $S_{12}$ gegeben durch:

$$\Delta\phi = \frac{2\pi}{\lambda} \cdot (2\Delta h) - \frac{2\pi}{\lambda} \cdot (x_1 + x_2) \qquad (1a)$$

$x_1 + x_2$ entspricht der Verlängerung des optischen Wegs, den die Wellenfronten von $S_{12}$ zusätzlich im Vergleich zu den Wellenfronten von $S_{11}$ zurückzulegen haben, wenn eine Vertikalverschiebung um $\Delta h$ erfolgt. Aus Fig. 3 ist ersichtlich:

$$x_1 = \frac{\Delta h}{\cos\alpha}$$

$$x_2 = x_1 \cdot \cos 2\alpha$$

Mit diesen Werten kann Gleichung (1a) umgeformt werden in:

$$\Delta\phi = \frac{2\pi}{\lambda} \left\{ 2\Delta h - x_1 \underbrace{\frac{(1 + \cos 2\alpha)}{2}}_{= 2\cos^2\alpha} \right\}$$

$$= \frac{2\pi}{\lambda} \left\{ 2\Delta h - x_1 \cdot 2\cos^2\alpha \right\}$$

$$= \frac{2\pi}{\lambda} \left\{ 2\Delta h - \frac{\Delta h}{\cos\alpha} \cdot 2\cos^2\alpha \right\}$$

$$= \frac{4\pi}{\lambda} \Delta h (1 - \cos\alpha) \qquad = \text{Gl. (1)}$$

Um eine eindeutige Meßung zu gewährleisten, muß die Bedingung

$$\Delta\phi < 2\pi \qquad (2)$$

erfüllt werden, was gleichbedeutend ist mit der Forderung

GE 979 022E

$$\Delta h = \frac{\lambda}{2(1-\cos\alpha)} \qquad (3)$$

Diese Bedingung kann aber praktisch für jeden beliebigen Wert $\Delta h$ durch entsprechende Wahl des Einfallswinkels $\alpha$ erfüllt werden. Der Einfallswinkel $\alpha$ kann durch die Wahl der Aufspaltung im doppelbrechenen Kristall und/oder der Brennweite f der Linse 7 beliebig klein gemacht werden. D. h., der Meßbereich kann bei dieser Meßmethode beliebig groß gemacht werden, ohne daß die Eindeutigkeit der Messung gefährdet wird.

Der Ausdruck (3) für den Gesamtumfang des Meßbereichs entspricht im wesentlichen dem Schärfentiefenbereich S des optischen Systems:

$$S = \frac{\lambda}{N.A.^2} = \frac{\lambda}{\sin^2\alpha} = \frac{\lambda}{(1+\cos\alpha)\,(1-\cos\alpha)} \approx \frac{\lambda}{2\cdot(1-\cos\alpha)}$$

Solange die Testoberfläche also innerhalb des Meßbereichs (3) gehalten wird, treten keine Fokusprobleme auf.

Nach (1) ist die Höhendifferenz $\Delta h$ gegeben durch

$$\Delta h = \Delta\phi \cdot \frac{\lambda}{4\pi(1-\cos\alpha)} \qquad (4)$$

Das oben beschriebene Ergebnis geht anschaulich auch aus der Tatsache hervor, daß die Periodizität der Interferenz-Amplituden des senkrecht einfallenden Strahls als Funktion des Abstandes von der Oberfläche des Objektes 8 gleich $\lambda/2$ ist, während die Periodizität der Interferenz-Amplituden des seitlich reflektierten Strahls als Funktion des Abstandes von der Oberfläche des Objektes gleich $\lambda/2 \cos\alpha$ ist. Bei einer Verschiebung der reflektierenden Fläche in Richtung der optischen Achse tritt eine konstruktive oder destruktive Interferenz der beiden Strahlen daher nicht nach jeder Verschiebung um $\lambda/2$, sondern erst nach einer Ver-

GE 979 022E

- 8 -

schiebung um ein Vielfaches von λ/2 auf, was in Analogie zur Zweifarbeninterfermetrie eine Vergrößerung des eindeutigen Meßbereichs bedeutet. Es ist leicht einzusehen, daß der Meßbereich eine inverse Funktion des Winkels α ist. Wird anstelle der Linse 7 ein anderes sammelndes oder strahlenvereinigendes Element, beispielsweise ein Spiegel oder eine andere geeignete Anordnung verwendet, muß die Phasendifferenz Null eingestellt oder eine bestimmte Referenzlage der Objektfläche als Nullpunkt gewählt werden.

In Fig. 2 wird eine Weiterbildung des Erfindungsgedankens wiedergegeben, die die in Fig. 1 dargestellte Vorrichtung enthält. Eine Beschreibung, des mit den Bezugszeichen 1 bis 10 beschriebenen Teils kann daher unterbleiben.

Der den doppelbrechenden Kristall 5 nach dem zweiten Durchtritt verlassende Strahl 10 durchsetzt den Strahlenteiler 4 und gelangt zu einem Kompensator 11, mit dessen Hilfe beispielsweise die Nullage eingestellt werden kann. Anschließend durchsetzt der Strahl einen polarisationsabhängigen Modulator 12, in dem die Phasenlage der in einer Richtung polarisierten Komponente relativ zur Phasenlage der senkrecht zu dieser Richtung polarisierten Komponente periodisch um λ/2 verschoben wird. Bei einer vollkommen ebenen und senkrecht zur optischen Achse der Linse 7 liegenden reflektierenden Oberfläche des Objektes 8 ist der Phasenunterschied zwischen den beiden senkrecht zueinander polarisierten Komponenten des den doppelbrechendem Kristall 5 verlassenden Strahls 10 gleich Null. Durch die periodische Verschiebung der Phasenlagen dieser beiden Komponenten durch den Modulator 12 wird der Polarisationszustand des diesen verlassenden Strahls periodisch von in einer Richtung linear polarisiert, über eliptisch, zirkular zu in einer dazu senkrechten Richtung linear polarisiert und umgekehrt verändert. Entsprechend läßt der Polarisator 13 periodisch Intensitäten des Strahls durch, die entsprechend den Verlauf einer Sinuslinie zwischen Null und einer Maximalintensität liegen. Bei einer bestimmten Orientierung des Polarisators 13 tritt bei einer gegebenen Phasendifferenz der beiden Komponenten des Strahls 10 die Maximalintensität und bei einer um $\lambda/2$ davon verschiedenen Phasendifferenz die Intensität Null durch den Polarisator 13. Wird durch die reflektierende Fläche des Objektes 8, beispielsweise durch die in beiden Figuren eingezeichnete Stufe eine Phasendifferenz zwischen beiden Strahlen erzeugt, so wird die Intensität Null oder die maximale Intensität den Polarisator 10 jeweils dann durchsetzen, wenn die durch das Objekt 8 erzeugte Phasenverschiebung durch den Modulator 12 vollständig kompensiert oder zu $\lambda/2$ ergänzt wird. Da die Phasenverschiebung im polarisationsabhängigen Modulator 12 eine lineare Funktion der erregenden Wechselspannung ist, kann durch eine an sich bekannte einfache elektrische Schaltung, der die an einer Ausgangsklemme eines dem Polarisator 13 nachgeschalteten Photodelektors 14 auftretende Spannung und die den Modulator 12 erregende Spannung zugeführt wird, festgestellt werden, bei welcher Amplitude der den Modulator 12 erregenden Spannung eine vollständige Kompensation der durch das Objekt erzeugten Phasendifferenz stattfindet. Da die Phasenverschiebung im Modulator 12 eine lineare Funktion der Amplitude der diesen erregenden Wechselspannung ist, ist es möglich, durch Messung und Speicherung der zu den Zeitpunkten der Minimal- oder Maximalamplituden des an den Klemmen 15 des Photodetektors 14 auftretenden Signals vorliegenden Amplitude der den Modulator steuernden Spannung die genaue Größe der auf der gemessenen Fläche vorliegenden Störung mit großer Genauigkeit und innerhalb von wenigen Mikrosekunden zu ermitteln. Der besondere Vorteil der Erfindung liegt vor allen darin, daß neben einer für viele Anwendungen unerläßlichen Erweiterung des Meßbereiches auch eine steuerbare erforderlichenfalls programmierbare Anpas-

GE 979 022E

sung des Meßbereiches an die jeweiligen Anforderungen möglich ist. Der bisher bei vielen Anwendungen erforderliche Einsatz von zwei sich ergänzenden Meßverfahren, beispielsweise eine mit mechanischen Mitteln durchgeführte Grobmessung und eine daran anschließende interferometrische Feinmessung kann gemäß der Erfindung mit einem einzigen Meßverfahren durchgeführt werden. Ein weiterer Vorteil besteht darin, daß das erfindungsgemäße Verfahren in einfacher Weise mit verschiedenen anderen Verfahren und Vorrichtungen kombinniert werden kann, die u. a. auch eine extrem schnelle automatische Erstellung der Meßergebnisse erlauben.

Zur einfachen und schnellen, aber auch gröberen Auswertung einer Oberflächenmessung mit dem hier beschriebenen Tastkopf wird in den Ausgangsstrahl 10 ein optischer Analysator gebracht; dessen Durchlaßrichtung muß dabei so orientiert sein, daß Anteile beider senkrecht zueinander polarisierter Teilstrahlen durchgelassen werden. Die durchgelassenen Anteile haben parallele Polarisationsrichtung und können miteinander interferieren. Aus der Lage der Interferenzstreifen kann dann auf das Oberflächen-Profil geschlossen werden.

GE 979 022E

P A T E N T A N S P R Ü C H E

1. Interferometrisches Meßverfahren, insbesondere zur Profilbestimmung von Oberflächen, bei dem zwei senkrecht zueinander polarisierte Teilstrahlenbündel die zu untersuchende Oberfläche beaufschlagen,
dadurch gekennzeichnet,
daß die Achsen der beiden Teilstrahlenbündel einen Winkel ($\alpha$) miteinander einschließen,
daß beide Teilstrahlenbündel auf einen gemeinsamen Bereich der zu untersuchenden Oberfläche gerichtet werden und
daß die reflektierten Teilstrahlen zur Erzeugung von Interferenzen vereinigt werden.

2. Verfahren nach Anspruch 1,
dadurch gekennzeichnet,
daß die beiden Teilstrahlenbündel konvergent sind und mit ihrem gemeinsamen Brennpunkt auf der zu untersuchenden Oberfläche liegen.

3. Verfahren nach Anspruch 1 oder 2,
dadurch gekennzeichnet,
daß die Auswertung des Phasenunterschieds der senkrecht zueinander polarisierten, reflektierten Teilstrahlenbündel durch Auswertung des Interferenzfeldes erfolgt, das mit einem Analysator erzeugt wird, der Komponenten beider Teilstrahlenbündel durchläßt.

4. Verfahren nach Anspruch 1 oder 2,
dadurch gekennzeichnet,
daß der Phasenunterschied der beiden senkrecht zueinander polarisierten, reflektierten Teilstrahlenbündel durch Kompensation (z. B. mit einem elektro-optischen Modulator (12) bestimmt wird.

GE 979 022E

5. Einrichtung zur Durchführung des Verfahrens nach Anspruch 2,
   dadurch gekennzeichnet,
   daß das aufzuspaltende Strahlenbündel (2, Fig. 1) zur Bildung einer ordentlichen (o) und einer außerordentlichen (eo) Komponente einem doppelbrechenden Element (5) zugeführt wird,
   daß die beiden im doppelbrechenden Element erzeugten Teilstrahlenbündel durch ein nachgeschaltetes $\lambda/4$-Plättchen (6) und ein fokussierendes Element (7) unter voneinander verschiedenen Einfallswinkeln auf den zu untersuchenden Bereich des Objekts gerichtet werden und daß die unter verschiedenen Winkeln am Objekt reflektierten Teilstrahlenbündel über das fokussierende Element, das $\lambda/4$-Plättchen und das doppelbrechende Element wiedervereinigt werden.

6. Einrichtung nach Anspruch 5,
   dadurch gekennzeichnet,
   daß das im doppelbrechenden Element (5) erzeugte ordentliche Teilstrahlenbündel längs der optischen Achse des fokussierenden Elements (7) auf das Objekt (8) auftrifft.

7. Einrichtung nach Anspruch 5 oder 6,
   dadurch gekennzeichnet,
   daß der Winkel ($\alpha$) zwischen den Achsen beider auf das Objekt auftreffenden Teilstrahlenbündel durch Wahl des Abstands beider Achsen vor Eintritt in das fokussierende Element (7) und die Brennweite (f) des fokussierenden Elements (7) bestimmt wird.

8. Einrichtung nach Anspruch 7,
   dadurch gekennzeichnet,
   daß die Strahlenbündelaufspaltung durch die Dicke des doppelbrechenden Elements (5) bestimmt wird.

GE 979 022E

FIG. 1

FIG. 2

FIG. 3

IBM — GE 979 022 E

| | Europäisches Patentamt | **EUROPÄISCHER RECHERCHENBERICHT** | 0021148 Nummer der Anmeldung |
|---|---|---|---|
| | | | EP 80 10 3087 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| X | <u>DE - A - 2 518 047</u> (VICKERS LTD.)<br>* Seite 4, Zeile 20 bis Seite 6, Zeile 14; Seite 11, Zeile 31 bis Seite 13, Zeile 36; Seite 15, Zeilen 11-18 *<br><br>-- | 1-3, 5-7 | G 01 B 9/02<br> 11/30 |
| | <u>GB - A - 717 233</u> (F.H. SMITH)<br>* Seite 4, Zeilen 61-83; Seite 5, Zeilen 73-86 *<br><br>-- | 1,3,5, 8 | RECHERCHIERTE SACHGEBIETE (Int. Cl.³) |
| | <u>US - A - 3 666 371</u> (H. DE LANG)<br>* Spalte 4, Zeilen 46-72 *<br><br>---- | 4 | G 01 B 9/02 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09-09-1980 | CARETTE |

EPA form 1503.1 06.78